# EUROPEAN PATENT SPECIFICATION

(11) **EP 3 406 365 B1**
(45) Date of publication and mention of the grant of the patent: **29.07.2020**
(21) Application number: 18174179.4
(22) Date of filing: 24.05.2018
(51) Int. Cl.: B21D 43/00, B21D 43/28, B23Q 3/06

(54) **MACHINE TO PROCESS SECTION BARS, IN PARTICULAR MADE OF ALUMINIUM, LIGHT ALLOYS, PVC OR THE LIKE**
MASCHINE ZUR VERARBEITUNG VON PROFILSTÄBEN, INSBESONDERE AUS ALUMINIUM, LEICHTLEGIERUNGEN, PVC ODER DERGLEICHEN
MACHINE POUR TRAITER DES BARRES DE SECTION, FABRIQUÉES EN PARTICULIER EN ALUMINIUM, ALLIAGES LÉGERS, PVC OU ANALOGUES

(30) Priority: 24.05.2017 IT 201700056311
(43) Date of publication of application: 28.11.2018
(73) Proprietor: F.O.M. Industrie S.r.l., 47841 Cattolica (IT)
(72) Inventor: LATTANZI, Lorenzo, 61121 PESARO (PU) (IT)
(74) Representative: Manconi, Stefano

(56) References cited:
- EP-A1- 1 134 055
- EP-A1- 2 305 440
- EP-A2- 2 093 013
- DE-A1- 19 735 069

## Description

The invention relates to a machine to process section bars, in particular made of aluminium, light alloys, PVC or the like, according to the preamble of claim 1 and as known from EP-1134055A1.

In the section bar processing field, machines are known, which comprise an elongated base, which extends in a first direction and is delimited by an upper face and by a side face, which are substantially flat; an overhead crane, which is coupled to the upper face in a sliding manner so as to move along the base in the first direction, extends above the base in a second direction transverse to the first direction, and is provided with an operating head to process the section bars; and a plurality of gripping units, each coupled to the side face in a sliding manner so as to move along the base in the first direction, having a pair of jaws to grip at least one section bar, and provided with a braking device to be stopped along the base.

Generally speaking, each gripping unit is further provided with a pair of first pneumatic supplying ducts, which are connected to the jaws in order to move them relative to one another between a clamping position and a release position of the section bar, and with a pair of second pneumatic supplying ducts, which are connected to the braking device in order to move it between a stopping position of the gripping unit along the base and a release position.

The machine further comprises a conveyor belt, which is mounted under the gripping units so as to receive the swarf generated by the operating head while it processes the section bars.

The conveyor belt is arranged between a first containing wall and a second containing wall, which extend along the base in the first direction, are mounted on opposite sides of the conveyor belt in the second direction, and are inclined towards one another to direct the swarf onto the conveyor belt.

The base has a plurality of openings, which extend between the upper face and a lower face of the base and are delimited, at the bottom, by the first containing wall, so as to discharge the swarf onto the conveyor belt.

On the second containing wall there is fixed a pneumatic manifold, which is connected to the pneumatic supplying ducts of each gripping unit.

Known section bar processing machines of the type described above are affected by some drawbacks, which are mainly due to the fact that the pneumatic supplying ducts extend between the relative gripping units and the aforesaid pneumatic manifold, above the conveyor belt and, therefore, in an area of the machine that is completely exposed to swarf. As a consequence, a relatively large quantity of swarf collects on the pneumatic supplying ducts and is not discharged on the outside of the machine by the conveyor belt.

It is an object of the present invention to provide a machine to process section bars, in particular made of aluminium, light alloys, PVC or the like, which is designed to eliminate the aforementioned drawbacks in a straightforward, relatively low-cost manner.

According to the invention, there is provided a machine to process section bars, in particular made of aluminium, light alloys, PVC or the like, according to the appended claims.

The invention will now be described with reference to the accompanying drawings, showing a non-limiting embodiment thereof, wherein:
figure 1 is a schematic perspective view, with parts removed for greater clarity, of a preferred embodiment of the section bar processing machine according to the invention;
figure 2 is a schematic side view, with parts removed for greater clarity, of a first detail of the machine of figure 1; and
figure 3 is a schematic perspective view, with parts removed for greater clarity, of a second detail of the machine of figure 1.

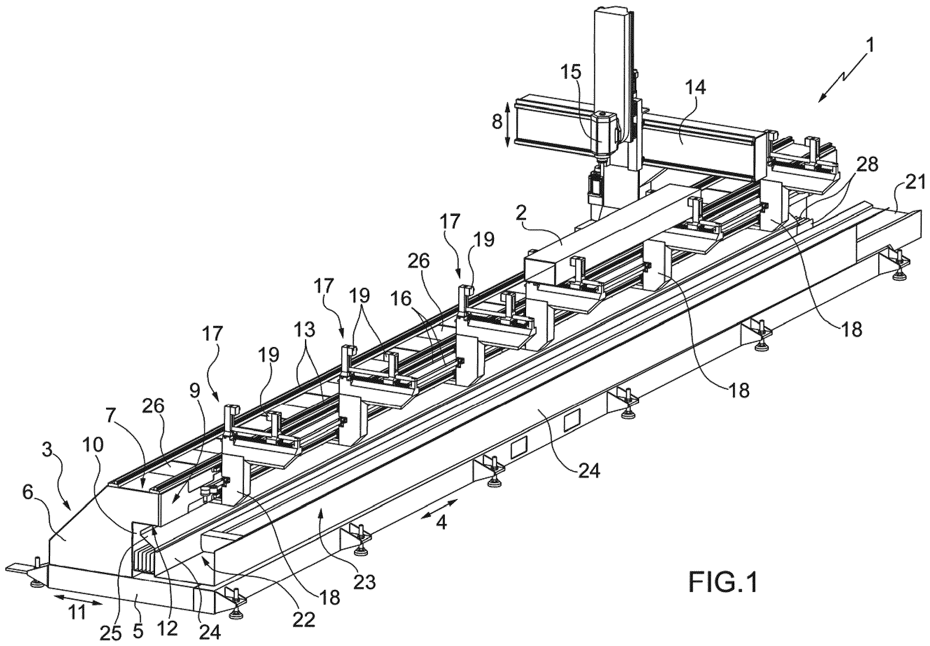

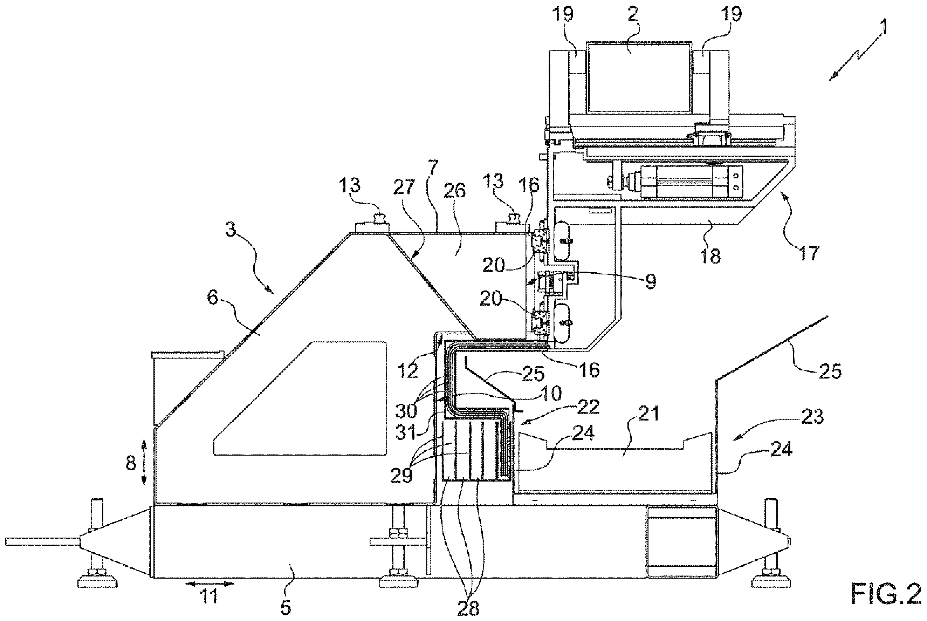

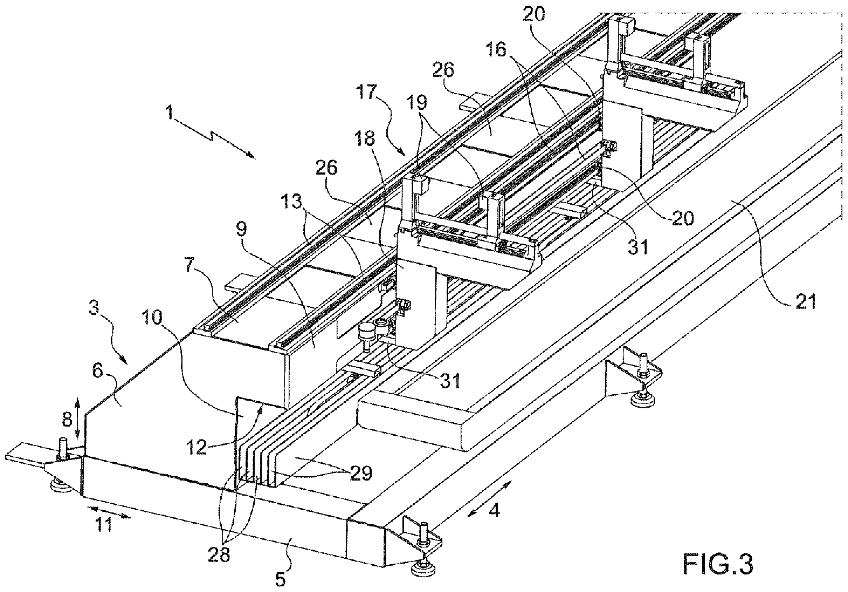

With reference to figure 1, 2 and 3, number 1 indicates, as a whole, a machine to process section bars 2, in particular made of aluminium, light alloys, PVC or the like, having an elongated shape.

The machine 1 comprises a base 3, which has an elongated shape, extends in a horizontal direction 4, and is substantially C-shaped.

The base 3 comprises a lower support plate 5, which substantially has the shape of a parallelepiped and is arranged in contact with a supporting floor.

The base 3 further comprises an upper longitudinal member 6, which projects upwards from the plate 5 and is substantially L-shaped.

The longitudinal member 6 is delimited by an upper face 7, which is substantially flat and is perpendicular to a vertical direction 8 transverse to the direction 4, and, furthermore, by two side faces 9, 10, which are substantially flat, extend perpendicularly to a horizontal direction 11 orthogonal to the directions 4 and 8, are parallel to one another, and are coplanar to respective containing planes, which are distinct from one another.

Furthermore, the two faces 9, 10 are connected by a lower face 12, which is substantially flat and perpendicular to the direction 8.

The upper face 7 is provided with a pair of guides 13 parallel to one another, which are mounted on the base 3 parallel to the direction 4 and are engaged in a sliding manner by an overhead crane 14, which extends above the base 3 in the direction 11 and supports an operating head 15, which is coupled to the overhead crane 14 in a known manner so as to move, relative to the overhead crane 14, in the directions 8 and 11.

The side face 9 is provided with a pair of guides 16 parallel to one another, which are mounted on the base 3 parallel to the direction 4 and are engaged in a sliding manner by a plurality of gripping units 17, which are configured to receive and hold at least one section bar 2.

Each unit 17 comprises a slide 18, which is coupled to the guides 16, is L-shaped, and projects from the face 9 in the direction 11.

The slide 18 supports a pair of jaws 19, which are movable relative to one another in the direction 11 between a clamping position and a release position of at least one section bar 2.

Each unit 17 is provided with a pair of braking devices 20, which is movable between a stopping position of the slide 18 on the guides 16 and and a release position.

The machine 1 further has a conveyor belt 21, which extends under the units 17 so as to receive the swarf generated by the operating head 15, and is mounted between two containing walls 22, 23 arranged on opposite sides of the conveyor 21 in the direction 11, the wall 22 being mounted between the face 10 and the conveyor 21.

Each wall 22, 23 comprises a lower portion 24, which is substantially perpendicular to the direction 11, and an upper portion 25, which is inclined so as to direct the swarf onto the conveyor 21.

The longitudinal member 6 has a plurality of openings 26, which extend between the face 7 and the face 12, and are each delimited by a respective side wall 27, which is substantially coplanar to the walls 27 of the other openings 26 and is inclined so as to orient the swarf onto the portion 25 of the wall 22 and, hence, onto the conveyor 21.

The base 3 further supports a plurality of guide channels 28, which are parallel to one another and to the direction 4.

The channels 28 are obtained between the plate 5 and the face 12, extend between the face 10 and the wall 22, are each delimited by a respective pair of side walls 29 parallel to one another and perpendicular to the direction 11, and are open at the top in the direction 8.

The jaws 19 and the braking devices 20 of each unit 17 are pneumatically supplied by means of a plurality of pneumatic supplying ducts 30, which are connected to the jaws 19 and to the devices 20 so as to move the jaws 19 between the relative clamping and release positions and the devices 20 between the relative stopping and release positions.

The ducts 30 of each unit 17 are housed inside a support bracket 31, which has the shape of a box-like body, projects from the relative slide 18 in the direction 11, and extends along the face 12, between the face 10 and the portion 25 of the wall 22, and above the channels 28.

Each bracket 31 opens outwards in the area of a relative channel 28 so as to allow the relative ducts 30 to project outwards from the bracket 31 and to be housed inside the channel 28.

According to some embodiments that are not shown:
the conveyor belt 21 is eliminated and replaced, for example, by a swarf collecting tank;
the conveyor belt 21 is eliminated so as to allow the swarf to fall into a collecting area obtained under the units 17; and
the pneumatic ducts 30 are eliminated and replaced by hydraulic ducts or electrical cables.

With regard to the description above, it should be pointed out that, herein, the term "supplying ducts" is used to indicate any one of the three types of ducts or cables mentioned above.

The machine 1 has some advantages, which are mainly due to the fact the the ducts 30 substantially extend under the longitudinal member 6, which means in an area of the machine 1 located between the face 12, the face 10 and the wall 22, which is protected by the inclined side walls 27 of the openings 26 and, therefore, is not subjected to the contamination caused by the swarf.

Furthermore, since the ducts 30 are flexible, the movement of the gripping units 17 does not prevent the ducts 30 from progressively engaging/disengaging the relative channels 28 depending on the position of the units 17 along the base 3 in the direction 4.

## Claims

1. A machine to process section bars (2), in particular made of aluminium, light alloys, PVC or the like, comprising an elongated base (3), which extends in a first direction (4) and is delimited by an upper face (7) and by a first side face (9); an overhead crane (14), which is coupled in a sliding manner to the upper face (7) so as to move along the base (3) in the first direction (4), extends above the base (3) in a second direction (11) transverse to the first direction (4), and is provided with an operating head (15) to process the section bars (2); at least one gripping unit (17), which is coupled in a sliding manner to the first side face (9) so as to move along the base (3) in the first direction (4), has a pair of jaws (19) to grip at least one section bar (2), and is further provided with at least one first supplying duct (30), which is connected to the jaws (19) so as to move the jaws (19) relative to one another between a clamping position and a release position of the section bar (2); and a collecting area (21), which is obtained under the gripping unit (17) so as to receive swarf; and **characterized in that** each first supplying duct (30) at least partly extends under the upper face (7).

2. A machine according to claim 1, wherein each gripping unit (17) is further provided with a braking device (20) to stop the gripping unit (17) along the base (3) in the first direction (4) and with at least one second supplying duct (30), which is connected to the braking device (20) so as to selectively control the operation of the braking device (20), and at least partly extends under the upper face (7).

3. A machine according to claim 1 or 2 and comprising, for each gripping unit (17), a respective guide channel (28), which extends under the upper face (7) in the first direction (4) so as to receive and house the supplying ducts (30) of the gripping unit (17).

4. A machine according to claim 3, wherein the guide channels (28) are mounted between the base (3) and the collecting area (21).

5. A machine according to claim 3 or 4, wherein the base (3) is delimited by a second side face (10), which extends in the first direction (4), and is substantially parallel to and distinct from the first side face (9); the guide channels (28) extending under the upper face (7) and between the containing planes of said first and second side faces (9, 10).

6. A machine according to claim 5, wherein the collecting area (21) extends in the first direction (4), and is mounted between a first containing wall (22) and a second containing wall (23); the guide channels (28) being mounted between the second side face (10) and the first containing wall (22).

7. A machine according to claim 6, wherein said first and second side faces (9, 10) are connected to one another by a lower face (12) of the base (3); the base (3) having at least one opening (26), which extends between the upper face (7) and the lower face (12) above the guide channels (28) .

8. A machine according to claim 7, wherein each opening (26) is laterally delimited by a side wall (27), which is inclined so as to direct the swarf towards the collecting area (21).

9. A machine according to claim 7 or 8, wherein the first containing wall (22) extends between the openings (26) and the guide channels (28), and is designed to prevent swarf from falling into the guide channels (28).

10. A machine according to any of the previous claims, wherein the base (3) is substantially C-shaped.

11. A machine according to any of the previous claims, wherein the collecting area (21) comprises a conveyor belt.

12. A machine according to any of the previous claims, wherein each supplying duct (30) is pneumatic or hydraulic or electric.

## Patentansprüche

1. Maschine zur Verarbeitung von Profilstäben (2), insbesondere aus Aluminium, Leichtlegierungen, PVC oder dergleichen, umfassend eine längliche Basis (3), die sich in eine erste Richtung (4) erstreckt und durch eine Oberfläche (7) und durch eine erste Seitenfläche (9) begrenzt ist; einen Laufkran (14), der gleitend mit der Oberfläche (7) gekoppelt ist, sodass er sich entlang der Basis (3) in die erste Richtung (4) bewegt, sich über der Basis (3) in eine zweite Richtung (11) quer zu der ersten Richtung (4) erstreckt und mit einem Bedienkopf (15) vorgesehen ist, um die Profilstäbe (2) zu verarbeiten; mindestens eine Greifeinheit (17), die gleitend mit der ersten Seitenfläche (9) gekoppelt ist, sodass sie sich entlang der Basis (3) in die erste Richtung (4) bewegt, ein Paar von Klemmbacken (19) aufweist, um mindestens einen Profilstab (2) zu greifen, und ferner mit mindestens einer ersten Zuführleitung (30) vorgesehen ist, die mit den Klemmbacken (19) so verbunden ist, dass sie die Klemmbacken (19) in Bezug zueinander zwischen einer Klemmposition und einer Freigabeposition des Profilstabs (2) bewegt; und einen Auffangbereich (21), der unter der Greifeinheit (17) so erhalten wird, dass er Späne aufnimmt; und **dadurch gekennzeichnet, dass** sich jede erste Zuführleitung (30) mindestens teilweise unter der Oberfläche (7) erstreckt.

2. Maschine nach Anspruch 1, wobei jede Greifeinheit (17) ferner mit einer Bremsvorrichtung (20), um die Greifeinheit (17) entlang der Basis (3) in der ersten Richtung (4) zu stoppen, und mit mindestens einer zweiten Zuführleitung (30) vorgesehen ist, die mit der Bremsvorrichtung (20) verbunden ist, um den Betrieb der Bremsvorrichtung (20) wahlweise zu steuern bzw. zu regeln, und sich mindestens teilweise unter der Oberfläche (7) erstreckt.

3. Maschine nach Anspruch 1 oder 2 und umfasst für jede Greifeinheit (7) einen jeweiligen Führungskanal (28), der sich unter der Oberfläche (7) in die erste Richtung (4) erstreckt, sodass er die Zuführleitungen (30) der Greifeinheit (17) aufnimmt und beherbergt.

4. Maschine nach Anspruch 3, wobei die Führungskanäle (28) zwischen der Basis (3) und dem Auffangbereich (21) montiert sind.

5. Maschine nach Anspruch 3 oder 4, wobei die Basis (3) durch eine zweite Seitenfläche (10) begrenzt ist, die sich in die erste Richtung (4) erstreckt, und im Wesentlichen parallel zu und getrennt von der ersten Seitenfläche (9) ist; wobei sich die Führungskanäle (28) unter der Oberfläche (7) und zwischen den Umfassungsebenen der ersten und zweiten Seitenfläche (9, 10) erstrecken.

6. Maschine nach Anspruch 5, wobei der Auffangbereich (21) sich in die erste Richtung (4) erstreckt und zwischen einer ersten Umfassungswand (22) und einer zweiten Umfassungswand (23) montiert ist; wobei die Führungskanäle (28) zwischen der zweiten Seitenfläche (10) und der ersten Umfassungswand (22) montiert sind.

7. Maschine nach Anspruch 6, wobei die erste und zweite Seitenfläche (9, 10) mittels einer Unterfläche (12) der Basis (3) miteinander verbunden sind; wobei die Basis (3) mindestens eine Öffnung (26) aufweist, die sich zwischen der Oberfläche (7) und der Unterfläche (12) über den Führungskanälen (28) erstreckt.

8. Maschine nach Anspruch 7, wobei jede Öffnung (26) durch eine Seitenwand (27) seitlich begrenzt ist, die so geneigt ist, dass sie die Späne in Richtung des Auffangbereichs (21) leitet.

9. Maschine nach Anspruch 7 oder 8, wobei sich die erste Umfassungswand (22) zwischen den Öffnungen (26) und den Führungskanälen (28) erstreckt und ausgestaltet ist, zu verhindern, dass Späne in die Führungskanäle (28) fallen.

10. Maschine nach einem beliebigen der vorhergehenden Ansprüche, wobei die Basis (3) im Wesentlichen C-förmig ist.

11. Maschine nach einem beliebigen der vorhergehenden Ansprüche, wobei der Auffangbereich (21) ein Förderband umfasst.

12. Maschine nach einem beliebigen der vorhergehenden Ansprüche, wobei jede Zuführleitung (30) pneumatisch oder hydraulisch oder elektrisch ist.

## Revendications

1. Machine pour traiter des barres de profilé (2), réalisées notamment en aluminium, alliages légers, PVC ou similaires, comprenant une base allongée (3), qui s'étend dans une première direction (4) et est délimitée par une face supérieure (7) et par une première face de côté (9) ; un pont roulant (14), qui est couplé de manière coulissante à la face supérieure (7) de façon à se déplacer le long de la base (3) dans la première direction (4), s'étend au-dessus de la base (3) dans une deuxième direction (11) transversale à la première direction (4), et est pourvu d'une tête d'actionnement (15) pour traiter les barres de profilé (2); au moins une unité de préhension (17), qui est couplée de manière coulissante à la première face de côté (9) de façon à se déplacer le long de la base (3) dans la première direction (4), comporte une paire de mâchoires (19) pour saisir au moins une barre de profilé (2), et est en outre pourvue d'au moins un premier conduit d'alimentation (30), qui est raccordé aux mâchoires (19) de façon à déplacer les mâchoires (19) les unes par rapport aux autres entre une position de serrage et une position de libération de la barre de profilé (2) ; et une zone de collecte (21), qui est obtenue sous l'unité de préhension (17) de façon à recevoir des copeaux; et **caractérisée en ce que** chaque premier conduit d'alimentation (30) s'étend au moins partiellement sous la face supérieure (7).

2. Machine selon la revendication 1, dans laquelle chaque unité de préhension (17) est en outre pourvue d'un dispositif de freinage (20) pour arrêter l'unité de préhension (17) le long de la base (3) dans la première direction (4) et d'au moins un deuxième conduit d'alimentation (30), qui est raccordé au dispositif de freinage (20) de façon à commander sélectivement l'actionnement du dispositif de freinage (20), et s'étend au moins partiellement sous la face supérieure (7).

3. Machine selon la revendication 1 ou 2, et comprenant, pour chaque unité de préhension (17), un canal de guidage (28) respectif, qui s'étend sous la face supérieure (7) dans la première direction (4) de façon à recevoir et loger les conduits d'alimentation (30) de l'unité de préhension (17).

4. Machine selon la revendication 3, dans laquelle les canaux de guidage (28) sont montés entre la base (3) et la zone de collecte (21).

5. Machine selon la revendication 3 ou 4, dans laquelle la base (3) est délimitée par une deuxième face de côté (10), qui s'étend dans la première direction (4), et est sensiblement parallèle à la première face de côté (9) et distincte de celle-ci ; les canaux de guidage (28) s'étendant sous la face supérieure (7) et entre les plans de rétention desdites première et deuxième faces de côté (9, 10).

6. Machine selon la revendication 5, dans laquelle la zone de collecte (21) s'étend dans la première direction (4), et est montée entre une première paroi de rétention (22) et une deuxième paroi de rétention (23) ; les canaux de guidage (28) étant montés entre la deuxième face de côté (10) et la première paroi de rétention (22).

7. Machine selon la revendication 6, dans laquelle lesdites première et deuxième faces de côté (9, 10) sont raccordées l'une à l'autre par une face inférieure (12) de la base (3) ; la base (3) ayant au moins une ouverture (26), qui s'étend entre la face supérieure (7) et la face inférieure (12) au-dessus des canaux de guidage (28).

8. Machine selon la revendication 7, dans laquelle chaque ouverture (26) est délimitée latéralement par une paroi de côté (27), qui est inclinée de façon à diriger les copeaux vers la zone de collecte (21).

9. Machine selon la revendication 7 ou 8, dans laquelle la première paroi de rétention (22) s'étend entre les ouvertures (26) et les canaux de guidage (28), et est conçue pour empêcher les copeaux de tomber dans les canaux de guidage (28).

10. Machine selon l'une quelconque des revendications précédentes, dans laquelle la base (3) est sensiblement en forme de C.

11. Machine selon l'une quelconque des revendications précédentes, dans laquelle la zone de collecte (21) comprend une courroie transporteuse.

12. Machine selon l'une quelconque des revendications précédentes, dans laquelle chaque conduit d'alimentation (30) est pneumatique ou hydraulique ou électrique.
